# EUROPEAN PATENT APPLICATION

(11) **EP 4 753 191 A2**
(43) Date of publication of application: **03.06.2026**
(21) Application number: 25212987.9
(22) Date of filing: 03.11.2025
(51) Int. Cl.: H04L 1/1867

(54) **TECHNOLOGIES FOR RADIO LINK CONTROL RETRANSMISSION BASED ON PACKET IMPORTANCE**

(30) Priority: 07.11.2024 US 202463717786 P
(71) Applicant: Apple Inc., Cupertino, CA 95014 (US)
(72) Inventor: KUO, Ping-Heng, Cupertino, 95014 (US); HU, Haijing, Cupertino, 95014 (US); ROSSBACH, Ralf, Cupertino, 95014 (US)
(74) Representative: COPA Copenhagen Patents

(57) **Abstract**

The present application relates to devices and components including apparatus, systems, and methods for adjusting radio link control retransmission based on packet importance.

## Description

### CROSS-REFERENCE TO RELATED APPLICATION

This application claims priority to U.S. Provisional Patent Application No. 63/717,786, entitled "TECHNOLOGIES FOR RADIO LINK CONTROL RETRANSMISSION BASED ON PACKET IMPORTANCE," filed on November 7, 2024, which is herein incorporated by reference in its entirety for all purposes.

### TECHNICAL FIELD

This application relates generally to communication networks and, in particular, to technologies for radio link control retransmission based on packet importance in wireless networks.

### BACKGROUND

Third Generation Partnership Project (3GPP) Technical Specifications (TSs) define standards for wireless networks. These TSs describe aspects related to signaling traffic through systems that incorporate wireless networks.

### BRIEF DESCRIPTION OF THE DRAWINGS

FIG. 1 illustrates a network environment in accordance with some embodiments.
FIG. 2 illustrates an operation flow/algorithmic structure in accordance with some embodiments.
FIG. 3 illustrates another operation flow/algorithmic structure in accordance with some embodiments.
FIG. 4 illustrates another operation flow/algorithmic structure in accordance with some embodiments.
FIG. 5 illustrates another operation flow/algorithmic structure in accordance with some embodiments.
FIG. 6 illustrates another operation flow/algorithmic structure in accordance with some embodiments.
FIG. 7 illustrates another operation flow/algorithmic structure in accordance with some embodiments.
FIG. 8 illustrates a user equipment in accordance with some embodiments.
FIG. 9 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple- core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

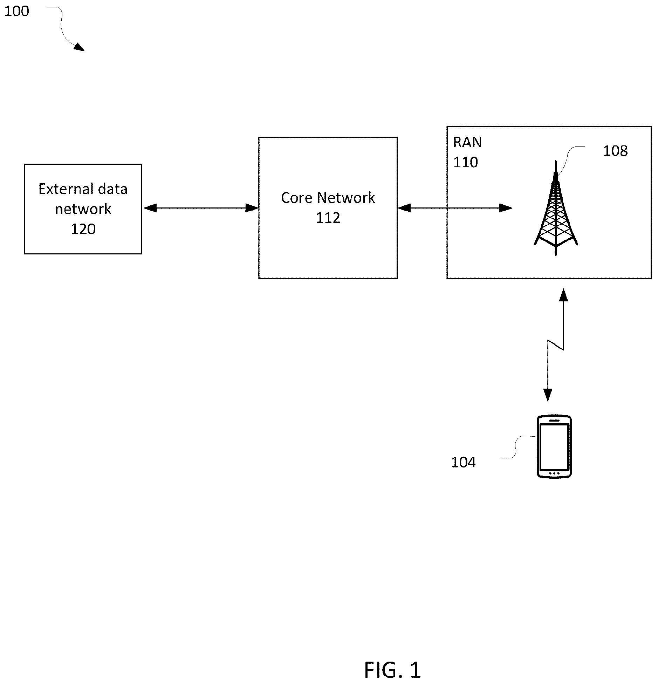

FIG. 1 illustrates a network environment 100 in accordance with some embodiments. The network environment 100 may include a user equipment (UE) 104 communicatively coupled with a base station 108 of a radio access network (RAN) 110. The UE 104 and the base station 108 may communicate over air interfaces compatible with 3GPP TSs such as those that define a Fifth Generation (5G) new radio (NR) system, a Sixth Generation (6G) system, or a later system. The base station 108 may provide user plane and control plane protocol terminations toward the UE 104.

In some embodiments, the UE 104 and base station 108 may establish data radio bearers (DRBs) to support transmission of data over a wireless link between the two nodes. In one example, these DRBs may be used for traffic from extended reality (XR) applications that contains a large amount of data conveying real and virtual images and audio for presentation to a user.

The network environment 100 may further include a core network 112. For example, the core network 112 may comprise a 5G core network (5GC), a 6G core network (6GC), or a later generation core network. The core network 112 may be coupled to the base station 108 via a fiber optic or wireless backhaul. The core network 112 may provide functions for the UE 104 via the base station 108. These functions may include managing subscriber profile information, subscriber location, authentication of services, or switching functions for voice and data sessions.

The UE 104 may include an application layer that generates application traffic to be transmitted to another device through the network environment 100. In some embodiments, the application layer may have an XR application that generates XR traffic. However, embodiments are not limited to XR use cases.

For XR and other services, the application layer may generate protocol data unit (PDU) sets, with individual PDU sets comprising one or more packets. A packet, which may also be referred to as a PDU, may be an Internet protocol (IP) packet or a non-IP packet. The packets of a PDU set may carry a payload of one unit of information generated by the application layer. The unit of information may be a frame or video slice for XR Services such as those defined in 3GPP Technical Report (TR) 26.926 v18.2.0 (2024-03-26), for example. In some implementations all PDUs in the PDU Set may be needed by an application layer at a destination node to allow the application layer to recover parts or all of the information unit. In other implementations, the application layer on the destination node may still be able to recover parts or all of the information unit even if some PDUs of a PDU set are missing.

In some embodiments, the data produced by an application layer of the UE 104 may include multi-modal data. Multi-modal data may include input data from different kinds of devices/sensors or the output data to different kinds of destinations (e.g. one or more UEs) desired for the same task or application. Multi-modal data may include more than one single-modal data (e.g., one type of data), and there may be a strong dependency among each single-modal data associated with multi-modal data.

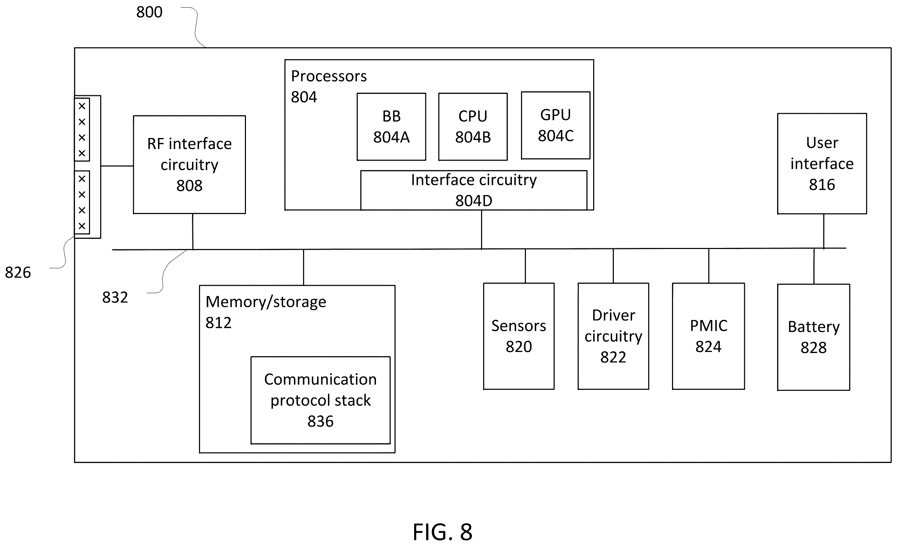

The PDU sets may be provided to a transmitter of the UE 104 that is configured to execute a communication protocol stack, for example, communication protocol stack 836 of FIG. 8, to facilitate communication via the network environment 100. The transmitter may implement layer 2 (L2) and layer 1 (L1) functionality. At the L2 level, the transmitter may include a service data adaptation protocol (SDAP) layer, a packet data convergence protocol (PDCP) layer, a radio link control (RLC) layer, and a media access control (MAC) layer. At the L1 level, the transmitter may include a physical (PHY) layer. Briefly, the SDAP layer may manage QoS flow handling between the QoS flows and the DRBs. The PDCP layer may manage robust header (de)compression and security between DRBs and RLC channels. The RLC layer may manage (re-)segmentation and error correction through automatic repeat request (ARQ) between logical channels and RLC channels. The MAC layer may manage scheduling/priority handling, (de)multiplexing, and hybrid automatic repeat request (HARQ) processes between logical channels and transport channels. And the PHY layer may manage the processing of the physical data and control channels. A device may have an entity designated to provide the operations of a specific layer. For example, a device may have a PDCP entity to perform PDCP layer operations, an RLC entity to perform RLC operations, etc.

A packet received by a layer from higher layers may be called a service data unit (SDU) of that layer. The packet transmitted by the layer to lower layers is called the PDU of that layer. For example, packets received by an RLC layer from an PDCP layer are called RLC SDUs, and packets sent by the RLC layer to a MAC layer are called RLC PDUs. In this sense, a packet may be referred to as either an SDU or a PDU depending on the layer perspective. Thus, packets of a PDU set may be referred to as PDCP PDUs or RLC SDUs. In some embodiments, one or more RLC SDUs or RLC SDU segments may correspond to the same packet, assuming the packet is defined at a higher layer.

Each PDU set may be associated with a PDU set importance (PSI) that may be used to identify a relative importance of the PDU set as compared to other PDU sets within the same quality of service (QoS) flow. For example, an I-frame may be considered as an important PDU set, while a P-frame may be considered as less important. There may be, for example, 16 levels of PSI. Some exemplary guidelines about how the PSI of a PDU Set may be assigned are given in TS 26.522 v18.1.0 (July 12, 2024).

In some embodiments, the RAN 110 may use PSI for PDU set discarding in the presence of congestion. For example, when there is congestion, the less-important PDU sets should be more likely to be discarded, while the more-important PDU sets should not be affected. Except as otherwise described herein, the PDU set discarding may be similar to that described in 3GPP TR 38.835 v18.0.1 (2023-04-05).

In some embodiments, the RAN 110 may send an indication, using a MAC control element (CE), to activate or deactivate a PSI-based SDU discarding mechanism of up to eight uplink DRBs simultaneously. This indication may be sent when uplink congestion is detected by the RAN 110. Except as otherwise described herein, activating/deactivating PSI-based SDU discarding using the MAC CE may be consistent with the description in 3GPP TS 38.321 v18.3.0 (2024-09-25).

When PSI-based SDU discarding is deactivated on a DRB, a PDCP entity of the UE 104 may apply the same discard timer for all packets regardless of their importance. For example, when a PDCP SDU is received in a buffer, a discard timer with a first value, referred to as *discardTimer,* is started for that PDCP SDU regardless of the importance of the associated PDU set. It may be noted that the PDCP entity may maintain a distinct discard timer for each PDCP SDU. In this instance, with PSI-based SDU discarding being deactivated, all the discard timers will be started with the same values, even though they are maintained separately based on when a particular PDCP SDU is received in an access stratum (AS) buffer for transmission.

When PSI-based SDU discarding is activated on a DRB, the PDCP entity of the UE 104 may apply different discard timers for the packets based on their importance. For example, the PDCP entity may start *discardTimers* for packets belonging to more-important PDU sets, and may start discard timers having a second value, referred to as *discardTimersForLowImportance*, for packets belonging to less-important PDU sets. The *discardTimerForLowImportance* may be shorter than the *discardTimer.*

The *discardTimer* may be referred to as a default discard timer for a DRB and the *discardTimerForLowImportance* may be referred to as a special discard timer for the DRB. In some instances, the special discard timer may be configured as zero, resulting in direct discarding. RRC signaling may be used to configure these two discard timers for a DRB. Except as otherwise described herein, configuration of the discard timers may be consistent with the description in 3GPP TS 38.331 v18.3.0 (2024-09-25) and operation of a transmitting PDCP entity with respect to the discard timers may be consistent with the description in 3GPP TS 38.323 v18.3.0 (2024-09-26).

Various user-plane enhancements are being considered for network updates. Some enhancements relate to acknowledgment mode (AM) RLC operation. In AM RLC operation, each transmitted SDU is assigned a sequence number. The receiver may send acknowledgments (ACKs) for correctly received SDUs or SDU segments and negative acknowledgments (NACKs) for missing or erroneous SDUs or SDU segments. Upon receiving a NACK, or in the absence of an ACK associated with an SDU or SDU segment, the transmitter may retransmit the corresponding SDU or SDU segment.

RLC retransmission related enhancements for AM RLC operation with small packet delay budgets may be considered. In particular, it may be desirable to specify mechanisms that can enable faster RLC-AM retransmissions, such as autonomous retransmission, polling enhancement, and status feedback enhancements.

Autonomous retransmission in RLC may affect capacity and packet delay. Consider, for example, that autonomous retransmission for RLC SDU can be triggered when the remaining time till discard timer expiry of its corresponding PDCP SDU becomes lower than a threshold. In this situation, an RLC SDU may be considered for retransmission even when the transmitter has not received the status report yet, which enables faster retransmission. This may result in frequent autonomous retransmission, which may impact capacity significantly. In particular, the RAN may not know autonomous retransmission have been triggered by UE, and it may become difficult to allocate the radio resources. Hence, in some embodiments, autonomous retransmission should only be applied as a last resort, e.g. when the transmitting window is stalled and, therefore, no RLC SDU can be transmitted.

As described above, PSI-based discarding is typically activated for a DRB when UL congestion is present. When PSI-based discarding is activated, less-important PDCP SDUs start shorter discard timers when they arrive in the AS buffer. This may trigger autonomous RLC retransmission (based on remaining time) more frequently as more packets are likely to have a remaining time smaller than a triggering threshold of autonomous retransmission. This may have an undesired impact on capacity, especially when the uplink is already congested. Various embodiments describe how to reduce the impact of autonomous RLC retransmission to uplink capacity when shorter discard timers are applied for less-important packets.

In accordance with a first aspect of this disclosure, autonomous retransmission may only be applied to RLC SDUs that correspond to an important packet. A packet may be considered an important packet if it is associated with a PDU set having an importance level greater than a predetermined threshold. While binary importances are described herein with reference to an importance threshold, for example, more important or less important, various levels of importance may be defined in various embodiments. In general, as used herein, an importance of a packet may correspond directly to an importance of a PDU set that includes the packet. How to identify an importance of a packet or a PDU set may be up to UE implementation in some embodiments.

In some embodiments of the first aspect of this disclosure, regardless of whether PSI-based discarding is activated or deactivated for a given DRB, autonomous retransmission is only triggered for RLC SDUs of the DRB that correspond to more important packets.

In some embodiments, the restricted application of autonomous retransmission of the first aspect may be based on an activation status of PSI-based discarding. For example, in some embodiments, when PSI-based discarding is deactivated for a DRB, autonomous retransmission is triggered for all RLC SDUs of the DRB. However, when PSI-based discarding is activated for the DRB, autonomous retransmission is only triggered for the RLC SDUs that correspond to the more important packets.

In some embodiments, autonomous retransmission may only be applied to RLC SDUs that correspond to PDCP SDUs whose *discardTimer* is running. In these embodiments, autonomous retransmission may not be applied to RLC SDUs that correspond to PDCP SDUs whose *discardTimerForLowImportance* is running. In this manner, autonomous retransmission may be reserved for the more important packets given that those are associated with *discardTimers*, while the less important packets are associated with *discardTimersForLowImportance.*

In embodiments of the first aspect in which both more important packets and less important packets are considered for retransmission, the retransmission of more important packets may be prioritized over retransmission of the less important packets. For example, autonomous retransmission of a less important packet may only take place in the event no more important packets are to be autonomously retransmitted. Various levels of prioritized autonomous retransmission of the more important packets may be implemented.

Given that the importance level of a packet is identified by the PDCP layer, embodiments of the first aspect include the PDCP entity informing the RLC entity of the importance level of each packet submitted to the RLC entity. This may enable the RLC entity to determine whether autonomous retransmission for the corresponding RLC SDU can be triggered.

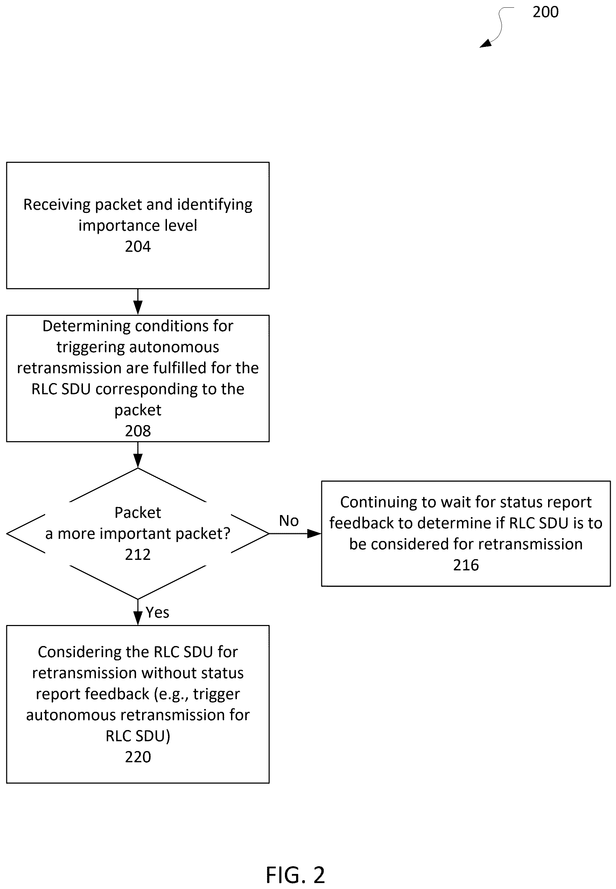

FIG. 2 illustrates an operation flow/algorithmic structure 200 in accordance with some embodiments. The operation flow/algorithmic structure 200 may be performed by UE 104, UE 800, or components therein, for example, baseband processor 804A.

The operation flow/algorithmic structure 200 may include, at 204, receiving a packet and identifying an importance level of the packet. The packet's importance level may correspond to the importance of the PDU set with which the packet is associated. In some embodiments, the importance level may be determined by an RLC entity receiving an importance indication from a PDCP entity.

The operation flow/algorithmic structure 200 may further include, at 208, determining conditions for triggering autonomous retransmission are fulfilled for the RLC SDU corresponding to the packet. For example, autonomous retransmission may be triggered for an RLC SDU when the UE or baseband processor is operating in RLC AM and a remaining time until discard timer expiry of its corresponding PDCP SDU becomes less than a predetermined threshold. Given that the PDCP entity may manage the discard timers, the PDCP entity may provide an indication to the RLC entity of when the remaining time until discard timer expiry becomes less than the predetermined threshold occurs.

The operation flow/algorithmic structure 200 may further include, at 212, determining whether the packet is considered a more important packet.

If the packet is determined to be a less important packet, the operation flow/algorithmic structure 200 may advance to continuing to wait for a status report feedback to determine if the RLC SDU corresponding to the packet is to be considered for retransmission at block 216.

If the packet is determined to be a more important packet, the operation flow/algorithmic structure 200 may advance to considering the RLC SDU corresponding to the packet for retransmission without status report feedback (for example, triggering autonomous retransmission for the RLC SDU) at block 220.

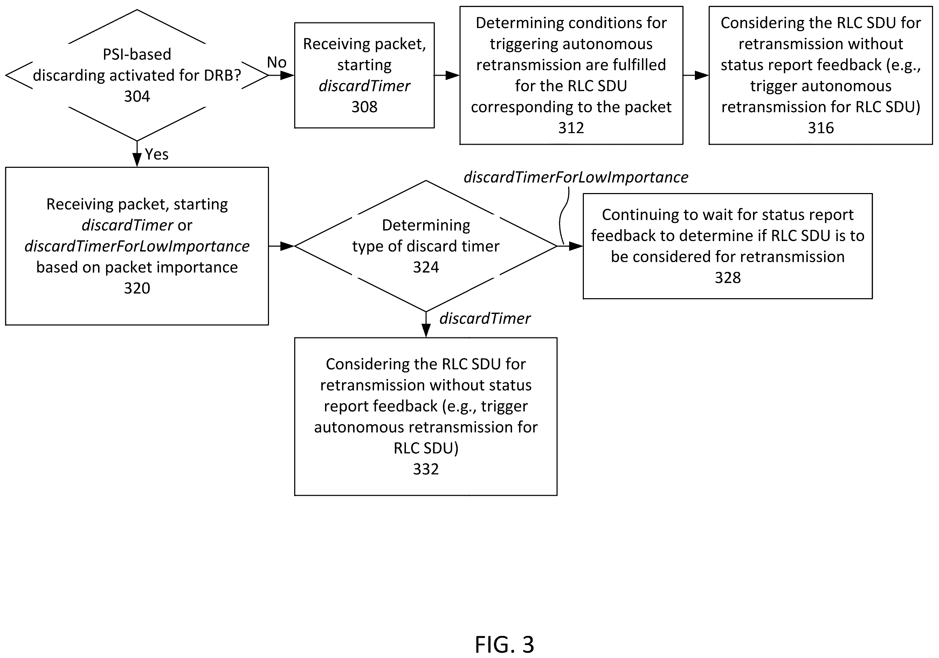

FIG. 3 illustrates an operation flow/algorithmic structure 300 in accordance with some embodiments. The operation flow/algorithmic structure 300 may be performed by UE 104, UE 800, or components therein, for example, baseband processor 804A.

The operation flow/algorithmic structure 300 may include, at 304, determining whether PSI-based discarding is activated for a DRB.

If it is determined, at 304, that PSI-based discarding is not activated for the DRB, the operation flow/algorithmic structure 300 may advance to receiving a packet and starting a *discardTimer* at block 308.

The operation flow/algorithmic structure 300 may further include, at 312, determining conditions for triggering autonomous retransmissions are fulfilled for the RLC SDU corresponding to the packet. The conditions may be determined in a manner similar to that described above with respect to FIG. 2.

The operation flow/algorithmic structure 300 may further include, at 316, considering the RLC SDU for retransmission without status report feedback (for example, triggering autonomous retransmission for the RLC SDU).

If it is determined, at 304, that PSI-based discarding is activated for the DRB, the operation flow/algorithmic structure 300 may advance to receiving a packet and starting either a *discardTimer* or a *discardTimerForLowImportance*, based on packet importance, at block 320.

The operation flow/algorithmic structure 300 may further include, at 324, determining the type of discard timer.

If it is determined, at 324, that the discard timer is the special timer (for example, the *discardTimerForLowImportance*), operation flow/algorithmic structure 300 may advance to block 328. At block 328, the operation flow/algorithmic structure 300 may include continuing to wait for status report feedback to determine if the RLC SDU is to be considered for retransmission.

If it is determined, at 324, that the discard timer is the default timer (for example, the *discardTimer*), operation flow/algorithmic structure 300 may advance to block 332. At block 332, the operation flow/algorithmic structure 300 may include considering the RLC SDU for retransmission without status report feedback (for example, triggering autonomous retransmission for the RLC SDU).

In accordance with a second aspect of this disclosure, differentiated autonomous retransmission triggering conditions may be defined. The second aspect may be based on an assumption that autonomous retransmission for an RLC SDU is triggered when its remaining time until discarding becomes smaller than a threshold (or when the RLC SDU becomes delay critical). In this case, different remaining time thresholds for autonomous retransmission triggering may be applied to packets with different importances. A first remaining time threshold may be applied for a more important packet, which may result in autonomous retransmission of the more important packets being triggered more easily (for example, faster). In contrast, a second remaining time threshold (which may be smaller than the first remaining time threshold) may be applied for a less important packet, which may result in autonomous retransmission of the less important packets being triggered less easily (for example, slower).

In some embodiments of the second aspect, different triggering conditions for autonomous retransmission may be applied to packets with different importance levels. For example, for a more important packet, autonomous RLC retransmission is triggered as soon as a remaining time becomes smaller than the autonomous retransmission threshold. However, for a less important packet, autonomous RLC retransmission is triggered when its remaining time becomes smaller than the autonomous retransmission threshold and when a poll retransmit timer is not running.

In some other embodiments of the second aspect, autonomous RLC retransmission is triggered as a remaining time becomes smaller than the autonomous retransmission threshold. However, for a less important packet, autonomous RLC retransmission can be triggered only if no new RLC SDU can be transmitted (e.g. when the transmitting window is stalled).

The poll retransmit timer may be used by an AM RLC entity to define when a poll should be retransmitted. For example, the poll retransmit (*t-PollRetransmit*) timer may be started after a poll has been sent from one AM RLC entity to a peer AM RLC entity. If *t-PollRetransmit* timer expires, the transmitting RLC entity sends a poll and considers unacknowledged SDUs for retransmission. As described above, the *t-PollRetransmit* timer not running (e.g., upon expiration of the timer) may be used as another condition for triggering autonomous retransmission of less important packets.

In some embodiments, the second aspect may only be applied when PSI-based discarding is activated for a DRB.

Since the importance level of the packet is identified by the PDCP entity, the PDCP entity should inform the RLC entity about the importance level of each packet submitted to the RLC entity. This may enable the RLC entity to decide whether the triggering condition is met (for example, the remaining time threshold) for autonomous retransmission for each corresponding RLC SDU.

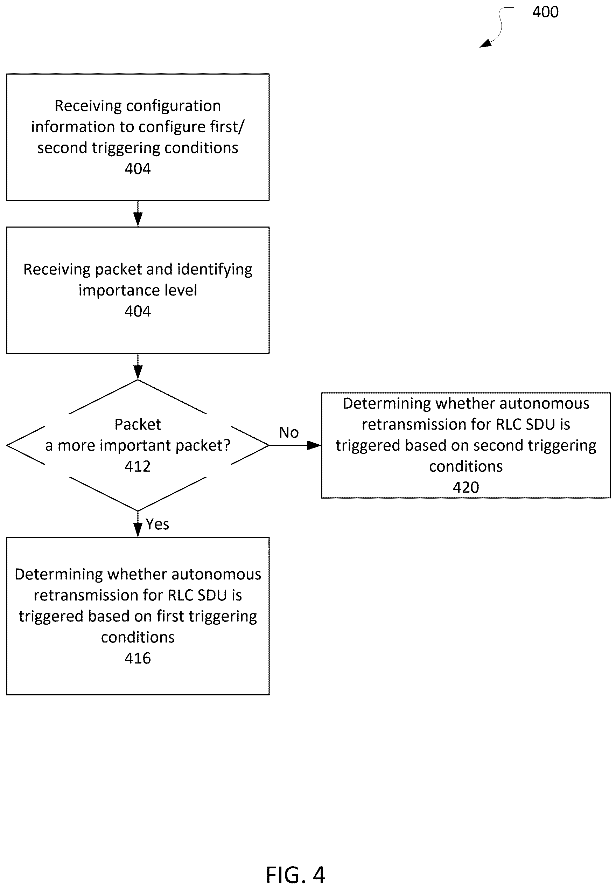

FIG. 4 illustrates an operation flow/algorithmic structure 400 in accordance with some embodiments. The operation flow/algorithmic structure 400 may be performed by UE 104, UE 800, or components therein, for example, baseband processor 804A.

The operation flow/algorithmic structure 400 may further include, at 404, receiving configuration information to configure first and second triggering conditions. The first triggering conditions may be associated with more important packets and the second triggering conditions may be associated with less important packets. In some embodiments, the first triggering condition may be based on a first remaining time threshold and the second triggering condition may be based on a second remaining time threshold, which is smaller than the first remaining time threshold. In other embodiments, the first triggering condition may be when a remaining time before discard becomes smaller than a remaining time threshold, while second triggering condition may be when the remaining time before discard becomes smaller than the remaining time threshold and the poll retransmit timer is not running.

In some embodiments, the configuration information may be received from a network through, for example, RRC signaling. In other embodiments, the configuration information may be predetermined or otherwise predefined in, for example, a 3GPP TS.

The operation flow/algorithmic structure 400 may further include, at 408, receiving a packet and identifying an importance level of the packet. The packet's importance level may be identified in a manner similar to that described above with respect to FIG. 2, for example.

The operation flow/algorithmic structure 400 may further include, at 412, determining whether the packet is considered a more important packet.

If the packet is determined to be a more-important packet, the operation flow/algorithmic structure 400 may advance to determining whether autonomous retransmission for the RLC SDU is triggered based on the first triggering conditions in block 416.

If the packet is determined to be a less-important packet, the operation flow/algorithmic structure 400 may advance to determining whether autonomous retransmission for the RLC SDU is triggered based on the second triggering conditions in block 420.

In accordance with a third aspect of this disclosure, various restrictions or limitations on autonomous retransmission may be defined with respect to different packet importances. The third aspect may be based on an assumption that autonomous retransmission has some constraints, such as the maximum number of retransmissions that can be considered for an RLC SDU, the maximum number of retransmissions that can be pending simultaneously, or the prohibit timer for triggering of autonomous retransmission. The maximum number of retransmissions that can be pending simultaneously may refer to conventional retransmissions triggered by a receiver or autonomous retransmissions.

In some embodiments of the third aspect, different constraints may be applied to packets with different importance levels. Some examples are provided below. Various of these examples may be combined with others.

In a first example, a more important packet can be considered for retransmission *N* times, while a less important packet can be considered for retransmission *K* times, where *N > K.* Thus, a more important packet has the potential to be autonomously retransmitted more times than a less important packet.

In a second example, a shorter prohibit timer for autonomous retransmission may be applied to a more important packet, while a longer prohibit timer for autonomous retransmission may be applied to a less important packet. Thus, a more important packet may be considered for autonomous retransmission more frequently than a less important packet.

In a third example, when a total number of pending retransmissions has reached a threshold, the UE 104 can only consider an additional packet for autonomous retransmission if it is an important packet. Otherwise, the UE does not consider this packet for autonomous retransmission if it is a less important packet, even if the triggering conditions of autonomous retransmission for this less important packet is fulfilled.

A fourth example may relate to a cap imposed on a number of packets that can be considered for autonomous retransmission in each PDU Set. The cap may be based on a number of packets, a ratio, a percentage, etc. Both the number and ratio of packets may be zero in some embodiments (i.e. none of the packets of a PDU Set can be considered for autonomous retransmission). In the fourth example, a first cap may apply to the more important PDU sets and a second cap may apply to the less important PDU sets. The first cap may be higher than the second cap to allow for more autonomous retransmissions of the more important packets. For instance, all packets of a more important PDU Set can be considered for autonomous retransmission, while only up to a specific ratio of packets of a less important PDU Set can be considered for autonomous retransmission. When the number of packets of a less important PDU Set that have been considered for autonomous retransmission has reached the ratio, the UE does not consider any more autonomous retransmission for any packet of this less-important PDU Set.

In some embodiments, the proposed methods of the third aspect may only apply when PSI-based discarding is activated for the DRB.

Since the importance level of the packet is identified by the PDCP layer, the PDCP layer should inform the RLC layer about the importance level of each packet submitted to the RLC layer. This may enable the RLC to decide the limitations/constraints for autonomous retransmission for each corresponding RLC SDU.

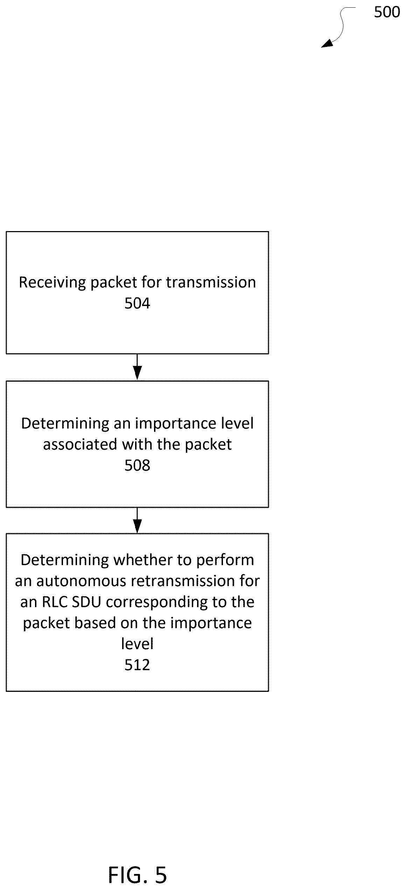

FIG. 5 illustrates an operation flow/algorithmic structure 500 in accordance with some embodiments. The operation flow/algorithmic structure 500 may be performed by UE 104, UE 800, or components therein, for example, baseband processor 804A.

The operation flow/algorithmic structure 500 may include, at 504, receiving a packet for transmission. In some embodiments, receiving of the packet at 504 may be done by an RLC entity.

The operation flow/algorithmic structure 500 may further include, at 508, determining an importance level associated with the packet. In some embodiments, the importance level may be determined by the RLC entity receiving an indication of the importance level from a PDCP entity. The importance level may correspond to, or be based on, a PSI of a PDU set of which the packet is a part. For example, the importance level may be the PSI or it may be a binary indication of importance to indicate whether the importance level corresponds to a more important level or a less important level.

The operation flow/algorithmic structure 500 may further include, at 512, determining whether to perform autonomous retransmission for an RLC SDU corresponding to the packet based on the importance level.

In some embodiments, if the packet's importance level is determined to be less than a predetermined threshold (e.g., a less important packet), the determination at block 512 may include determining not to perform the autonomous retransmission for the RLC SDU based on the importance level being less than the predetermined threshold.

In some embodiments, if the packet's importance level is determined to be less than a predetermined threshold (e.g., a less important packet), the determination at block 512 may include determining to perform the autonomous retransmission for the RLC SDU after performing autonomous retransmission of any RLC SDUs corresponding to packets associated with importance levels greater than the predetermined threshold (e.g., more important packets).

In some embodiments, the determination of whether to perform autonomous retransmission at block 512 may be further conditioned on whether PSI-based discarding is activated for a DRB associated with the RLC SDU.

In some embodiments, if PSI-based discarding is activated for the DRB, different discard timers may be started based on different importance levels and autonomous retransmission may be treated differently for the different discard timers. For example, a first discard timer (e.g., *discardTimer*) may be started if the importance level is a more important level and a second discard timer (e.g., *discardTimerForLowImportance*) may be started if the importance level is a less important level. In some embodiments, autonomous retransmission may not be applied to an RLC SDU with a *discardTimerForLowImportance* running, but may be applied to an RLC SDU with a *discardTimer* running.

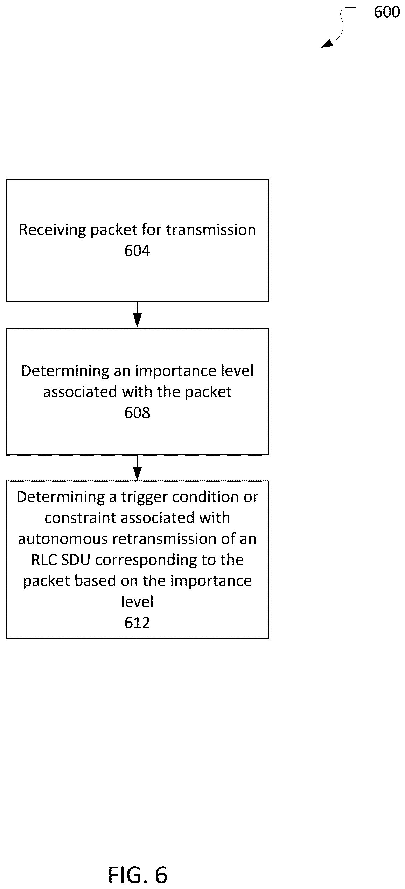

FIG. 6 illustrates an operation flow/algorithmic structure 600 in accordance with some embodiments. The operation flow/algorithmic structure 600 may be performed by UE 104, UE 800, or components therein, for example, baseband processor 804A.

The operation flow/algorithmic structure 600 may include, at 604, receiving a packet for transmission. In some embodiments, receiving of the packet at 604 may be done by an RLC entity.

The operation flow/algorithmic structure 600 may further include, at 608, determining an importance level associated with the packet. In some embodiments, the importance level may be determined by the RLC entity receiving an indication of the importance level from a PDCP entity. The importance level may correspond to, or be based on, a PSI of a PDU set of which the packet is a part. For example, the importance level may be the PSI or it may be a binary indication of importance to indicate whether the importance level corresponds to a more important level or a less important level.

The operation flow/algorithmic structure 600 may further include, at 612, determining a trigger condition or constraint associated with autonomous retransmission of an RLC SDU corresponding to the packet based on the importance level.

In some embodiments, the determination at block 612 may correspond to different trigger conditions associated with autonomous retransmission of RLC SDUs corresponding to packets with different importance levels. For example, a first condition to trigger autonomous retransmission of the RLC SDU may be associated with a more important packet and a second condition to trigger autonomous retransmission of the RLC SDU may be associated with a less important packet. The first condition may be a discard timer being less than a first threshold (e.g., a more-important packet threshold), while the second condition may be a discard timer being less than a second threshold (e.g., a less-important packet threshold). The less-important packet threshold may be less than the more-important packet threshold, which may result in more frequent autonomous retransmissions of the RLC SDUs corresponding to the more important packets.

In some embodiments, the network may provide a UE/processor with configuration information to configure the first and second thresholds. In other embodiments, the first and second thresholds may be predefined or otherwise preconfigured.

In some embodiments, the condition for autonomous retransmission of RLC SDUs corresponding to more important packets may be that a discard timer is less than a threshold, while the condition for autonomous retransmission of RLC SDUs corresponding to less important packets may be that a discard timer is less than the threshold and a poll retransmit timer is not running.

In some embodiments, the determination at block 612 may correspond to different constraints associated with autonomous retransmission of RLC SDUs corresponding to packets with different importance levels. For example, the first constraint may be applicable to RLC SDUs corresponding to more important packets and a second constraint may be applicable to RLC SDUs corresponding to less important packets. Some examples of the first and second constraints are provided below.

In one example, the first constraint may be that the RLC SDU can be considered for retransmission a first number of times, and the second constraint may be that the RLC SDU can be considered for retransmission less than the first number of times.

In another example, the first constraint may be that a prohibit timer for autonomous retransmission a set with a first value and the second constraint may be that the prohibit timer for autonomous retransmission is set with a second value. The second value is greater than the first value, which may cause the RLC SDUs corresponding to less important packets to be autonomously retransmitted less frequently than the RLC SDUs corresponding to more important packets.

In another example, the constraint may be that the RLC SDU cannot be considered for autonomous retransmission if the importance level is less than a predetermined threshold and a maximum number of retransmissions (e.g., conventional retransmissions or autonomous retransmissions) that can be pending simultaneously has been reached; and the RLC SDU can be considered for autonomous retransmission if the importance level is greater than the predetermine threshold and a maximum number of retransmissions that can be pending simultaneously has been reached. Thus, in this case, the maximum number of retransmissions that can be pending simultaneously may only apply to the less important packets.

In another example, the first constraint may be that a first number of packets can be reconsidered for retransmission in each PDU set, and the second constraint may be that a second number of packets can be reconsidered for retransmission in each PDU set. The first number may be larger than the second number. The first and second numbers may be defined by absolute numbers, ratios, or percentages.

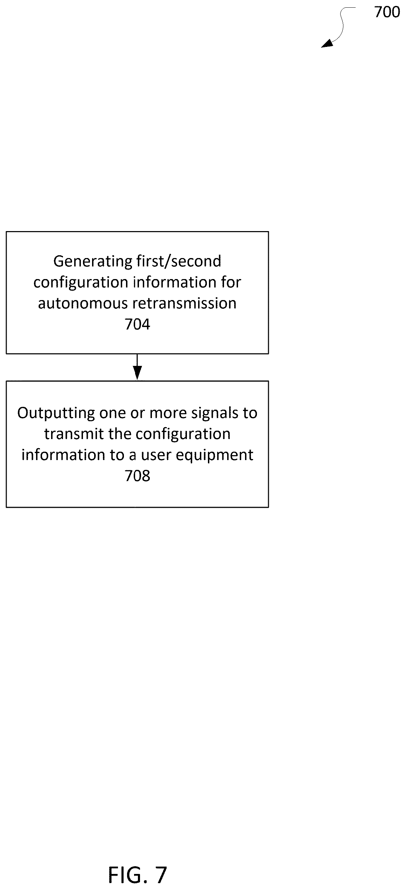

FIG. 7 illustrates an operation flow/algorithmic structure 700 in accordance with some embodiments. The operation flow/algorithmic structure 700 may be performed by base station 108, network device 900, or components therein, for example, baseband processor 904A.

The operation flow/algorithmic structure 700 may include, at 704, generating first and second configuration information. The first configuration information may be for RLC SDUs corresponding to packets associated with an importance level greater than a predetermined threshold (e.g., more important packets) and the second configuration information may be for RLC SDUs corresponding to packets associated with an importance level less than the predetermined threshold (e.g., less important packets).

In some embodiments, the first configuration information configures a first trigger condition and the second configuration information configures a second trigger condition. For example, the first trigger condition may include a first remaining time threshold for autonomous retransmission triggering and the second trigger condition may include a second remaining time threshold for autonomous retransmission triggering.

In some embodiments, the first configuration information configures a first constraint and the second configuration information configures a second constraint. For example, the first constraint may include a first number of times a packet can be considered for retransmission and the second constraint may include a second number of times the packet can be considered for retransmission. For another example, the first constraint may include a first prohibit timer value for autonomous retransmission and the second constraint may include a second prohibit timer value for autonomous retransmission. For yet another example, the first constraint may include a first number of packets that can be considered for autonomous retransmission in each PDU set and the second constraint may include a second number of packets that can be considered for autonomous retransmission in each PDU set.

The operation flow/algorithmic structure 600 may further include, at 608, outputting one or more signals to transmit the first and second configuration information to a user equipment.

FIG. 8 illustrates a UE 800 in accordance with some embodiments. The UE 800 may be similar to and substantially interchangeable with UE 84.

The UE 800 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 800 may include processors 804, RF interface circuitry 808, memory/storage 812, user interface 816, sensors 820, driver circuitry 822, power management integrated circuit (PMIC) 824, antenna 826, and battery 828. The components of the UE 800 may be implemented as integrated circuits (ICs), portions thereof, discrete electronic devices, or other modules, logic, hardware, software, firmware, or a combination thereof. The block diagram of FIG. 8 is intended to show a high-level view of some of the components of the UE 800. However, some of the components shown may be omitted, additional components may be present, and different arrangement of the components shown may occur in other implementations.

The components of the UE 800 may be coupled with various other components over one or more interconnects 832, which may represent any type of interface, input/output, bus (local, system, or expansion), transmission line, trace, or optical connection that allows various circuit components (on common or different chips or chipsets) to interact with one another.

The processors 804 may include processor circuitry such as, for example, baseband processor (BB) 804A, central processor unit (CPU) 804B, and graphics processor unit (GPU) 804C. The processors 804 may include any type of circuitry or processor circuitry that executes or otherwise operates computer-executable instructions, such as program code, software modules, or functional processes from memory/storage 812 to cause the UE 800 to perform autonomous retransmission as described herein. The processors 804 may also include interface circuitry 804D to enable communication by, for example, communicatively coupling the processor circuitry with one or more other components of the UE 800.

In some embodiments, the baseband processor 804A may access a communication protocol stack 836 in the memory/storage 812 to communicate over a 3GPP compatible network. In general, the baseband processor 804A may access the communication protocol stack 836 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 808.

The baseband processor 804A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 812 may include one or more non-transitory, computer-readable media that includes instructions (for example, communication protocol stack 836) that may be executed by one or more of the processors 804 to cause the UE 800 to perform autonomous retransmission as described herein.

The memory/storage 812 includes any type of volatile or non-volatile memory that may be distributed throughout the UE 800. In some embodiments, some of the memory/storage 812 may be located on the processors 804 themselves (for example, memory/storage 812 may be part of a chipset that corresponds to the baseband processor 804A), while other memory/storage 812 is external to the processors 804 but accessible thereto via a memory interface. The memory/storage 812 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 808 may include transceiver circuitry and a radio frequency front module (RFEM) that allows the UE 800 to communicate with other devices over a radio access network. The RF interface circuitry 808 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna 826 and proceed to filter and amplify (with a low-noise amplifier) the signal. The signal may be provided to a receiver of the transceiver that down-converts the RF signal into a baseband signal that is provided to the baseband processor of the processors 804.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 826.

In various embodiments, the RF interface circuitry 808 may be configured to transmit/receive signals in a manner compatible with NR access technologies.

The antenna 826 may include antenna elements to convert electrical signals into radio waves to travel through the air and to convert received radio waves into electrical signals. The antenna elements may be arranged into one or more antenna panels. The antenna 826 may have antenna panels that are omnidirectional, directional, or a combination thereof to enable beamforming and multiple input, multiple output communications. The antenna 826 may include microstrip antennas, printed antennas fabricated on the surface of one or more printed circuit boards, patch antennas, or phased array antennas. The antenna 826 may have one or more panels designed for specific frequency bands including bands in FR1 or FR2.

The user interface 816 includes various input/output (I/O) devices designed to enable user interaction with the UE 800. The user interface 816 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 800.

The sensors 820 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 822 may include software and hardware elements that operate to control particular devices that are embedded in the UE 800, attached to the UE 800, or otherwise communicatively coupled with the UE 800. The driver circuitry 822 may include individual drivers allowing other components to interact with or control various input/output (I/O) devices that may be present within, or connected to, the UE 800. For example, driver circuitry 822 may include a display driver to control and allow access to a display device, a touchscreen driver to control and allow access to a touchscreen interface, sensor drivers to obtain sensor readings of sensors 820 and control and allow access to sensors 820, drivers to obtain actuator positions of electro-mechanic components or control and allow access to the electro-mechanic components, a camera driver to control and allow access to an embedded image capture device, audio drivers to control and allow access to one or more audio devices.

The PMIC 824 may manage power provided to various components of the UE 800. In particular, with respect to the processors 804, the PMIC 824 may control power-source selection, voltage scaling, battery charging, or DC-to-DC conversion.

A battery 828 may power the UE 800, although in some examples the UE 800 may be mounted deployed in a fixed location and may have a power supply coupled to an electrical grid. The battery 828 may be a lithium ion battery, a metal-air battery, such as a zinc-air battery, an aluminum-air battery, a lithium-air battery, and the like. In some implementations, such as in vehicle-based applications, the battery 828 may be a typical lead-acid automotive battery.

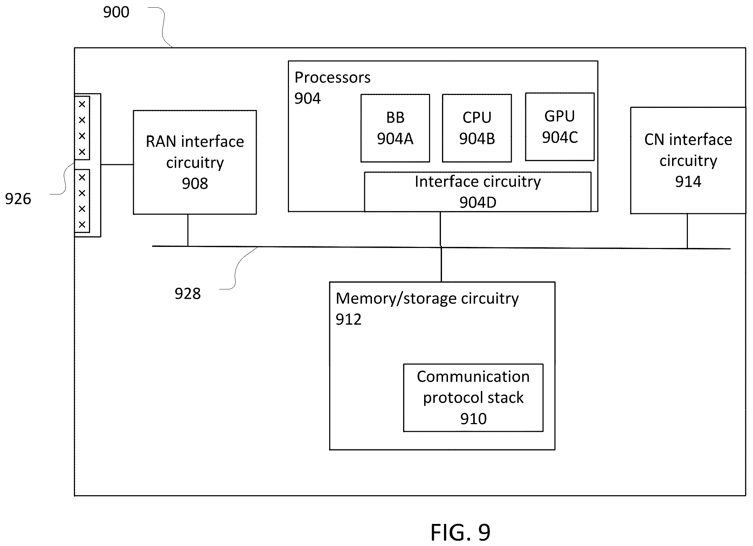

FIG. 9 illustrates a network device 900 in accordance with some embodiments. The network device 900 may be similar to, and substantially interchangeable with, the base station 108.

The network device 900 may include processors 904, RF interface circuitry 908 (if implemented as a base station), core network (CN) interface circuitry 914, memory/storage circuitry 912, and antenna structure 926.

The components of the network device 900 may be coupled with various other components over one or more interconnects 928.

The processors 904, RF interface circuitry 908, memory/storage circuitry 912 (including communication protocol stack 910), antenna structure 926, and interconnects 928 may be similar to like-named elements shown and described with respect to FIG. 8.

The processors 904 may include processor circuitry such as, for example, baseband processor (BB) 904A, central processor unit (CPU) 904B, and graphics processor unit (GPU) 904C. The processors 904 may include any type of circuitry or processor circuitry that executes or otherwise operates computer-executable instructions, such as program code, software modules, or functional processes from memory/storage circuitry 912 to cause the network device 900 to configure a UE as described herein. The processors 904 may also include interface circuitry 904D to communicatively couple the processor circuitry with one or more other components of the network device 900.

The CN interface circuitry 914 may provide connectivity to a core network, for example, a 5^{th} Generation Core network (5GC) using a 5GC-compatible network interface protocol such as carrier Ethernet protocols, or some other suitable protocol. Network connectivity may be provided to/from the network device 900 via a fiber optic or wireless backhaul. The CN interface circuitry 914 may include one or more dedicated processors or FPGAs to communicate using one or more of the aforementioned protocols. In some implementations, the CN interface circuitry 914 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method comprising: receiving a packet for transmission; determining an importance level associated with the packet; and determining whether to perform an autonomous retransmission for a radio link control (RLC) service data unit (SDU) corresponding to the packet based on the importance level.

Example 2 includes the method of example 1 or some other example herein, further comprising: receiving, at a RLC entity from a packet data convergence protocol (PDCP) entity, an indication of the importance level.

Example 3 includes the method of example 1 or some other example herein, further comprising: determining the importance level is less than a predetermined threshold, wherein determining whether to perform the autonomous retransmission for the RLC SDU includes: determining not to perform the autonomous retransmission for the RLC SDU based on said determining the importance level is less than a predetermined threshold; or determining to perform the autonomous retransmission for the RLC SDU after performing autonomous retransmission of any RLC SDUs corresponding to packets associated with importance levels greater than the predetermined threshold.

Example 4 includes the method of example 1 or some other example herein, further comprising: determining whether protocol data unit set importance (PSI)-based discarding is activated for a data radio bearer (DRB) associated with the RLC SDU; and determining whether to perform the autonomous retransmission for the RLC SDU based further on said determining whether PSI-based discarding is activated for the DRB.

Example 5 includes the method of example 1 or some other example herein, wherein the importance level is a first level that is less than a predetermined threshold or is a second level that is greater than the predetermined threshold and the method further comprises: determining protocol data unit set importance (PSI)-based discarding is activated for a data radio bearer (DRB) associated with the RLC SDU; starting, based on said determining PSI-based discarding is activated, a first discard timer for a PDCP SDU corresponding to the RLC SDU if the importance level is the first level; and starting, based on said determining PSI-based discarding is activated, a second discard timer for the PDCP SDU corresponding to the RLC SDU if the importance level is the second level.

Example 6 includes the method of example 5 or some other example herein, further comprising: determining not to perform the autonomous retransmission of the RLC SDU if the first discard timer is running for the PDCP SDU corresponding to the RLC SDU; and determining to perform the autonomous retransmission of the RLC SDU if the second discard timer is running for the PDCP SDU corresponding to the RLC SDU.

Example 7 includes a method comprising: receiving a packet for transmission; determining an importance level associated with the packet; determining, based on the importance level, a condition that triggers an autonomous retransmission of a radio link control (RLC) service data unit (SDU) corresponding to the packet.

Example 8 includes the method of example 7 or some other example herein, wherein the importance level is a first level that is less than a predetermined threshold or is a second level that is greater than the predetermined threshold and said determining the condition comprises: determining the condition is a discard timer is less than a first threshold if the importance level is the first level; and determining the condition is the discard timer being less than a second threshold if the importance level is the second level, wherein the first threshold is less than the second threshold.

Example 9 includes the method of example 8 or some other example herein, further comprising: receiving, from a network, information to configure the first threshold and the second threshold.

Example 10 includes the method of example 7 or some other example herein, wherein the importance level is a first level that is less than a predetermined threshold or is a second level that is greater than the predetermined threshold and said determining the condition comprises: if the importance level is the first level, determining the condition is a discard timer is less than a threshold and a poll retransmit timer is not running; and if the importance level is the second level, determining the condition is the discard timer being less than the threshold.

Example 11 includes the method of example 7 or some other example herein, further comprising: receiving, at a radio link control (RLC) layer from a packet data convergence protocol (PDCP) layer, an indication of the importance level.

Example 12 includes the method of example 7 or some other example herein, further comprising: determining whether protocol data unit set importance (PSI)-based discarding is activated for a data radio bearer (DRB) associated with the RLC SDU; and determining whether to perform the autonomous retransmission for the RLC SDU based further on said determining whether PSI-based discarding is activated for the DRB.

Example 13 includes a method comprising: receiving a packet for transmission; determining an importance level associated with the packet; determining, based on the importance level, a constraint associated with autonomous retransmission of a radio link control (RLC) service data unit (SDU) corresponding to the packet; and determining whether to perform autonomous retransmission of the RLC SDU based on the constraint.

Example 14 includes the method of example 13 or some other example herein, wherein: the importance level is a first level that is less than a predetermined threshold or is a second level that is greater than the predetermined threshold; if the importance level is the first level, the constraint is that the RLC SDU can be considered for retransmission less than a first number of times; and if the importance level is the second level, the constraint is that the RLC SDU can be considered for retransmission the first number of times.

Example 15 includes the method of example 13 or some other example herein, wherein: the importance level is a first level that is less than a predetermined threshold or is a second level that is greater than the predetermined threshold; if the importance level is the first level, the constraint is that a prohibit timer for autonomous retransmission is set with a first value; and if the importance level is the second level, the constraint is that the prohibit timer for autonomous retransmission is set with a second value that is less than the first value.

Example 16 includes the method of example 13 or some other example herein, wherein: the importance level is a first level that is less than a predetermined threshold or is a second level that is greater than the predetermined threshold, wherein the constraint provides that: the RLC SDU cannot be considered for autonomous retransmission if the importance level is the first level and a maximum number of retransmissions (conventional retransmissions or autonomous retransmissions) that can be pending simultaneously has been reached; and the RLC SDU can be considered for autonomous retransmission if the importance level is the second level and a maximum number of retransmissions (conventional retransmissions or autonomous retransmissions) that can be pending simultaneously has been reached.

Example 17 includes the method of example 13 or some other example herein, wherein: the importance level is a first level that is less than a predetermined threshold or is a second level that is greater than the predetermined threshold; if the importance level is the first level, the constraint is that a first number or ratio of packets can be considered for retransmission in each PDU set; and if the importance level is the second level, the constraint is that a second number or ratio of packets can be considered for retransmission in each PDU set, wherein the second number or ratio is greater than the first number or ratio.

Example 18 includes a method comprising: generating first and second configuration information for autonomous retransmission of radio link control (RLC) service data units (SDUs), wherein the first configuration information is for RLC SDUs corresponding to packets associated with an importance level greater than a predetermined threshold and the second configuration information is for RLC SDUs corresponding to packets associated with an importance level less than the predetermined threshold; and outputting one or more signals to transmit the first and second configuration information to a user equipment.

Example 19 includes the method of example 18 or some other example herein, wherein the first configuration information is to configure a first trigger condition and the second configuration information is to configure a second trigger condition.

Example 20 includes the method of example 19 or some other example herein, wherein the first trigger condition includes a first remaining time threshold for autonomous retransmission triggering and the second trigger condition includes a second remaining time threshold for autonomous retransmission triggering.

Example 21 includes the method of example 18 or some other example herein, wherein the first configuration information is to configure a first constraint and the second configuration information is to configure a second constraint.

Example 22 includes the method of example 21 or some other example herein, wherein: the first constraint includes a first number of times a packet can be considered for retransmission and the second constraint includes a second number of times the packet can be considered for retransmission; the first constraint includes a first prohibit timer value for autonomous retransmission and the second constraint includes a second prohibit timer value for autonomous retransmission; or the first constraint includes a first number of packets that can be considered for autonomous retransmission in each PDU set and the second constraint includes a second number of packets that can be considered for autonomous retransmission in each PDU set

Another example may include an apparatus comprising means to perform one or more elements of a method described in or related to any of examples 1-22, or any other method or process described herein.

Another example may include one or more non-transitory computer-readable media comprising instructions to cause an electronic device, upon execution of the instructions by one or more processors of the electronic device, to perform one or more elements of a method described in or related to any of examples 1-22, or any other method or process described herein.

Another example may include an apparatus comprising logic, modules, or circuitry to perform one or more elements of a method described in or related to any of examples 1-22, or any other method or process described herein.

Another example may include a method, technique, or process as described in or related to any of examples 1-22, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-22, or portions thereof.

Another example may include a signal as described in or related to any of examples 1-22, or portions or parts thereof.

Another example may include a datagram, information element, packet, frame, segment, PDU, or message as described in or related to any of examples 1-22, or portions or parts thereof, or otherwise described in the present disclosure.

Another example may include a signal encoded with data as described in or related to any of examples 1-22, or portions or parts thereof, or otherwise described in the present disclosure.

Another example may include a signal encoded with a datagram, IE, packet, frame, segment, PDU, or message as described in or related to any of examples 1-22, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-22, or portions thereof.

Another example may include a computer program comprising instructions, wherein execution of the program by a processing element is to cause the processing element to carry out the method, techniques, or process as described in or related to any of examples 1-22, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
receiving a packet for transmission;
determining the packet is associated with a discard timer for packets having an importance level greater than a predetermined threshold; and
triggering an autonomous retransmission for a radio link control (RLC) service data unit (SDU) corresponding to the packet based on said determining the packet is associated with the discard timer.

2. The method of claim 1, further comprising:
receiving, at a RLC entity from a packet data convergence protocol (PDCP) entity, an indication of the importance level.

3. The method of any of claims 1-2, further comprising:
determining whether protocol data unit set importance (PSI)-based discarding is activated for a data radio bearer (DRB) associated with the RLC SDU; and
determining whether to perform the autonomous retransmission for the RLC SDU based further on said determining whether PSI-based discarding is activated for the DRB.

4. The method of any of claims 1-3, wherein the discard timer is for a packet data convergence protocol (PDCP) SDU corresponding to the RLC SDU and the method further comprises:
determining protocol data unit set importance (PSI)-based discarding is activated for a data radio bearer (DRB) associated with the RLC SDU; and
starting, based on said determining PSI-based discarding is activated, the discard timer for the PDCP SDU corresponding to the RLC SDU.

5. The method of claim 4, further comprising:
triggering the autonomous retransmission of the RLC SDU based further on the discard timer running for the PDCP SDU corresponding to the RLC SDU.

6. One or more computer-readable media having instructions that, when executed, cause processor circuitry to:
receive a packet for transmission;
determine an importance level associated with the packet; and
determine, based on the importance level, a condition that triggers an autonomous retransmission of a radio link control (RLC) service data unit (SDU) corresponding to the packet.

7. The one or more computer-readable media of claim 6, wherein the importance level is a first level that is less than a predetermined threshold or is a second level that is greater than the predetermined threshold and to determine the condition the processor circuitry is to:
determine the condition is a remaining time till discard timer expiry is less than a first threshold if the importance level is the first level; and
determine the condition is the remaining time till discard timer expiry being less than a second threshold if the importance level is the second level, wherein the first threshold is less than the second threshold.

8. The one or more computer-readable media of any of claims 6-7, wherein the importance level is a first level that is less than a predetermined threshold or is a second level that is greater than the predetermined threshold and to determine the condition the processor circuitry is to:
if the importance level is the first level, determine the condition is a remaining time till discard timer expiry is less than a threshold and a poll retransmit timer is not running; and
if the importance level is the second level, determine the condition is the remaining time till discard timer expiry being less than the threshold.

9. The one or more computer-readable media of any of claims 6-8, wherein the instructions, when executed, further cause the processor circuitry to:
receive, at a radio link control (RLC) layer from a packet data convergence protocol (PDCP) layer, an indication of the importance level.

10. The one or more computer-readable media of any of claims 6-9, wherein the instructions, when executed, further cause the processor circuitry to:
determine whether protocol data unit set importance (PSI)-based discarding is activated for a data radio bearer (DRB) associated with the RLC SDU; and
determine whether to perform the autonomous retransmission for the RLC SDU based further on said determination of whether PSI-based discarding is activated for the DRB.

11. The one or more computer-readable media of any of claims 6-10, wherein the importance level is greater than a predetermined threshold and the instructions, when executed, further cause the processor circuitry to:
determine protocol data unit set importance (PSI)-based discarding is activated for a data radio bearer (DRB) associated with the RLC SDU; and
start, based on determination that PSI-based discarding is activated, a discard timer for a packet data convergence protocol (PDCP) SDU corresponding to the RLC SDU, wherein the discard timer is associated with the importance level.

12. The one or more computer-readable media of claim 11, wherein the instructions, when executed, further cause the processor circuitry to:
determine to perform the autonomous retransmission of the RLC SDU based on the discard timer running for the PDCP SDU corresponding to the RLC SDU.

13. A method comprising:
generating first and second configuration information for autonomous retransmission of radio link control (RLC) service data units (SDUs), wherein the first configuration information is for RLC SDUs corresponding to packets associated with an importance level greater than a predetermined threshold and the second configuration information is for RLC SDUs corresponding to packets associated with an importance level less than the predetermined threshold; and
outputting one or more signals to transmit the first and second configuration information to a user equipment.

14. The method of claim 13, wherein the first configuration information is to configure a first trigger condition and the second configuration information is to configure a second trigger condition.

15. The method of claim 14, wherein the first trigger condition includes a first remaining time threshold for autonomous retransmission triggering and the second trigger condition includes a second remaining time threshold for autonomous retransmission triggering.
